(19) Europäisches Patentamt
European Patent Office
Office européen des brevets

(11) **EP 3 094 020 B1**

(12) **EUROPEAN PATENT SPECIFICATION**

(45) Date of publication and mention
of the grant of the patent:
**18.09.2019 Bulletin 2019/38**

(51) Int Cl.:
***H04B 7/185*** *(2006.01)*   ***H04B 17/10*** *(2015.01)*

(21) Application number: **15001437.1**

(22) Date of filing: **13.05.2015**

(54) **METHOD FOR DETERMINING PAYLOAD PARAMETERS OF A DEVICE UNDER TEST**

VERFAHREN ZUR BESTIMMUNG VON NUTZLASTPARAMETERN EINER ZU TESTENDEN VORRICHTUNG

PROCÉDÉ PERMETTANT DE DÉTERMINER DES PARAMÈTRES DE CHARGE UTILE D'UN DISPOSITIF EN TEST

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.11.2016 Bulletin 2016/46**

(73) Proprietor: **Airbus Defence and Space GmbH 82024 Taufkirchen (DE)**

(72) Inventors:
 • **Geise, Alexander**
 **D-85560 Ebersberg (DE)**
 • **Schmidt, Carsten**
 **D-81243 München (DE)**
 • **Migl, Josef**
 **D-83707 Bad Wiessee (DE)**

(74) Representative: **Frenkel, Matthias Alexander Wuesthoff & Wuesthoff Patentanwälte PartG mbB Schweigerstrasse 2 81541 München (DE)**

(56) References cited:
 **CN-A- 102 624 467    US-A1- 2003 017 827**

 • **A.C. NEWELL ET AL: "Gain and power parameter measurements using planar near-field techniques", IEEE TRANSACTIONS ON ANTENNAS AND PROPAGATION, vol. 36, no. 6, 6 June 1988 (1988-06-06), pages 792-803, XP055216136, ISSN: 0018-926X, DOI: 10.1109/8.1181**

**Description**

The invention relates to a method for determination of at least one payload parameter of a device under test under near-field conditions.

Payload parameters are determined for satellites as devices under test, for example. Measurement of payload parameters, such as Equivalent Isotropic Radiated Power (ERIP), Gain over Noise Temperature (G/T), Carrier Interference Ratio (C/I), Input Power Flux Density (IPFD)/ Saturated Flux Density (SFD), Passive Intermodulation (PIM), Gain Transfer, Gain over Frequency (G/F), Polarization Discrimination or Beacon /TCR ERIP, is made with help of a far field test measurement system or a compensated compact range test measurement system under far field conditions. However, it is sometimes difficult or even not possible to determine the payload parameters of some telecom satellite antennas under far field conditions.

However, methods have been developed [RD 1] which allow the determination of at least some of the above mentioned payload parameters, for example, the Equivalent Isotropic Radiated Power (ERIP), under near-field conditions.

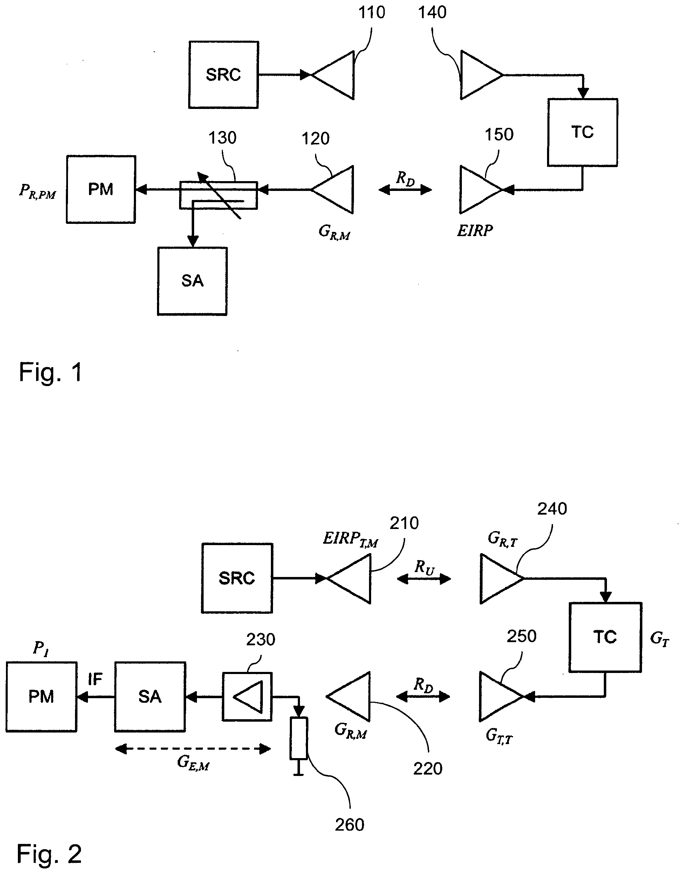

The EIRP is a measure for the total power which is radiated by the satellite and is expressed in [dBm] or [dBW]. It consists of the power provided by a satellite transponder (source SRC in Fig. 1) plus the gain of a satellite transmit antenna 110. It is measured by a receive antenna 120 connected to a power meter PM. The EIRP is then calculated from the received power at the power meter PM which has to be corrected by the gain of the receive antenna 120 of the measurement equipment as well as by the free space loss between satellite and measurement antenna. The corresponding relation to compute EIRP from a Compensated Compact Range (CCR) / far-field measurement is given in equation (1).

For an EIRP measurement in the near field it has to be considered that the transmit antenna 110 of the satellite has not established its far-field gain. This has to be corrected when calculating the EIRP by means of a near-field correction factor v. This near field correction factor can be determined, for example, by an approach similar to a near-field far-field transformation. In [RD 1] an approach has been developed which allows to measure the EIRP in the near field of the antenna and to post-process the "near-field gain" of the DUT to the far field. The relation to compute EIRP from a planar near-field measurement is given in equation (2) based on [RD 1]. The near-field correction factor v is used in the far-field EIRP equation (1) as the effective distance for the free space loss determination. In this way the measured power level employing the near-field gain of the DUT is converted to the equivalent power level as it would be received in the far field. The near-field correction factor v is basically computed from a planar near-field pattern measurement. The pattern values are summed up- and normalized to the pattern value in the direction used for the payload measurement. Furthermore, a scaling is applied by the wavelength and the near-field sampling distance in x- and y- direction.

$$EIRP_{FF} = \frac{P_{R,PM}}{G_{R,M}} \left( \frac{4\pi R_D}{\lambda_D} \right)^2 \tag{1}$$

$$EIRP_{NF} = \frac{P_{R,PM}}{G_{R,M}} \left( \frac{4\pi}{\lambda_D} \right)^2 \underbrace{\left( \frac{\delta_x \delta_y \sum_i b_0(P_i) e^{-jk_0 \cdot P_i}}{b_0(P_0)\lambda_D} \right)^2}_{v_D} \tag{2}$$

In equations (1) and (2) the following parameters are used:

| | |
|---|---|
| $EIRP_{FF}$ | EIRP measured in far field; |
| $EIRP_{NF}$ | EIRP measured in near field; |
| $P_{R,PM}$ | Receive power at power meter; |
| $G_{R,M}$ | Gain of receive antenna measurement setup; |
| $R_D$ | Free space downlink distance; |
| $\lambda_D$ | Wavelength downlink; |
| $\delta_x$ | Near-field sampling distance in x-direction; |
| $\delta_y$ | Near-field sampling distance in y-direction; |
| $k_0$ | Measurement direction; |
| $P_i$ | Near-field measurement point i; |
| $P_0$ | Near-field measurement point used for payload measurement; |
| $v_D$ | Near-field correction factor for downlink; |

The principal setup for an EIRP measurement in the near-field is shown in Figure 1 for the radiated case.

In the radiated configuration the source SRC is used, together with a suitable antenna 110, to drive the satellite transponder into saturation. At the receive side of the measurement equipment the signal is received by the same antenna 120 and near-field probe, respectively, which was used for the pattern measurements in order to compute the near-field correction factor v. The power is measured by the power meter PM. A spectrum analyzer SA is connected via a coupler 130 in order to monitor the linearity of the satellite transponder when driving it into saturation.

The complexity of the instrumentation for the payload measurement itself is comparable to the compensated compact range (CCR) payload setup. In order to perform the computation of the EIRP value, the near-field correction factor v is required. It is calculated from the measured near-field pattern data. Therefore, a near-field scan of the satellite downlink antenna has to be available for each frequency of interest.

However, one drawback of the procedure described above is, that the method has been developed for mono-frequencies only. However, other payload parameters have to be assessed within a frequency band or with noisy data. The method described above would either fail or need too much time and resources to determine such payload parameters by means of a near-field measurement.

CN 102 624 467 A provides a method for testing a gain to noise temperature (G/T) value (a ground station quality factor) of a ground station by using a dual-station common-view comparative method, and aims to provide a G/T value testing method which is simple, convenient and reliable for operation, enables the measurement to be accurate, is independent of a calibration tower and has no restrictions on the aperture and frequency band of an antenna of the tested station.

It is therefore an object of the present invention to provide a method which easily allows the determination of a payload parameter of a device under test which is dependent from a frequency band or is dependent from a noise temperature.

This object is solved by a method according to claim 1. Preferred embodiments are set out in the dependent claims.

According to the invention, a method for determination of a payload parameter of a device under test is suggested, wherein the payload parameter to be determined is dependent from a frequency band or is dependent from a noise temperature. The method comprises the steps of:

   a) conducting a plurality of near field payload measurements of the device under test;
   b) determining a respective near-field correction factor for each measurement of the payload parameter;
   c) determining the payload parameter for the frequency band or the noise temperature by calculation from the measured plurality of payload parameters and the near-field correction factors.

As an advantage, no measurement under far field conditions has to be conducted. Nevertheless test measurement systems and measurement sequences as known from far field measurements can be used. An adaption of the results received from the near field measurement and conducted with a common test measurement system and measurement sequences as known from far field measurements is made by the near field correction factor which is unique for each payload parameter to be assessed.

As a further advantage, the invented method can be applied to near field and far field conditions. Near field conditions can be provided more easily for large satellites in a test measurement system due to less needed space. As a result, payload parameters can be determined in the complete system. Usage of coupling elements and thus measurement of separate up- and downlink paths can be avoided.

The near-field correction factor v is used in far-field equations as the effective distance for the free space loss determination. In this way the measured power level employing the near-field gain of the device under test is converted to the equivalent power level as it would be received in the far field. The near-field correction factor v is basically computed from a planar near-field pattern measurement. The pattern values are summed up- and normalized to the pattern value in the direction used for the payload measurement. Furthermore, a scaling may be applied by the wavelength and the near-field sampling distance in x- and y- direction.

The near-field correction factor v is calculated according to

$$v = \left( \frac{\delta_x \delta_y \sum_i b_0(P_i) e^{-jk_0 \cdot P_i}}{b_0(P_0) \lambda_D} \right) \tag{2a}$$

In particular, the device under test may be a satellite antenna, such as an antenna which is adapted to be used for telecommunication purposes.

The near field correction factor being unique for each setup (consisting of the device under test and the test measurement system) may be obtained by evaluating the near field to far field relation of the device under test. The evaluation may be done from near field to far field or from far field to near field.

According to a further preferred embodiment the near field correction factor is determined by a near-field to far-field transformation.

According to a further preferred embodiment, the step of conducting a near-field measurement comprises receiving a measurement signal with a near-field probe. As an advantage, test measurement systems and measurement sequences as known from far field measurements can be used.

According to a further preferred embodiment, gain over noise temperature is measured as a payload parameter. The gain over noise temperature (short: gain over temperature, G/T) is determined as ratio of the measurement signal to noise power. For example, the gain over noise temperature of a satellite antenna describes the ratio of the composite receiving antenna gain to the noise temperature.

The gain over noise temperature is determined by three separate power measurements, wherein in a first measurement a first noise power level ($P_1$) of the receiving measurement equipment is determined; in a second measurement a second noise power level ($P_2$) of the receiving measurement equipment and the device under test is determined; and in a third measurement a third noise power level ($P_3$) of the receiving measurement equipment including noise of the device under test and a carrier signal is determined. The near-field correction factor is considered and calculated, respectively, for the second and the third power levels ($P_2$, $P_3$).

It is sufficient if the near-field correction factor is applied to an uplink path of the measurement equipment only. The device under test may be operated in a fully radiated configuration or in a semi-radiated mode. The latter allows use of a single measurement antenna because of the use of a test coupler signal instead of a radiated uplink signal.

According to an alternative embodiment channel group delay is measured as a payload parameter. The group delay (GD) versus frequency (so called group delay response) is a measure of the slope of the phase response at any given frequency and it is a useful measure of time distortion. It is calculated by differentiating, with respect to frequency, the phase response versus frequency of the device under test. Variations in group delay cause signal distortion, just as deviations from linear phase cause distortion.

According to a preferred embodiment, the group delay measurement is carried out at one fixed location in the near-field to ensure that a transponder phase of the device under test is depending on the frequency of the measurement signal.

According to a further preferred embodiment separated near-field probes at different locations may be used for a respective measurement in the uplink and the downlink path in case the device under test comprises separate uplink and down-link antennas.

It is further preferred if the measurement equipment comprises means to convert the frequencies at the uplink and the downlink path for determining a near-field correction factor.

According to a further alternative embodiment gain over frequency is measured as a payload parameter. The gain over frequency (G/F) describes the overall gain of the device under test including receive antenna gain, transponder gain, and transmit antenna gain for a closed up- and downlink loop.

According to a preferred embodiment, the gain over frequency is calculated from the ratio of a received power and a transmitted power and the gain of the transmit and receive antennas of a measurement equipment together with compensated free space loss for an uplink and a downlink path. The compensation takes the near-field into consideration. The near-field correction factor is calculated according to equation (2a). The near-field pattern data is measured in a fully radiated configuration by transmitting an uplink signal with the measurement equipment and a downlink signal in a closed up- and downlink loop.

According to a preferred embodiment, the near field correction factor at least for the second and the third alternative is calculated from measured near-field pattern data which is obtained by a near-field scan of the device under test for at least one frequency of the frequency band. The near-field pattern data may be measured for a lower frequency and an upper frequency of the frequency band and at least one frequency between the lower and the upper frequency. The measured near-field pattern data is used for a subsequent approximation or interpolation.

The invention will be described more detailed by reference to the accompanying figures.

Fig.1     shows a known schematic view of a principal setup for an EIRP measurement.

Fig. 2    shows a schematic view of a principal setup for a G/T measurement, in which the noise power level $P_1$ of a receiving test equipment is determined.

Fig. 3    shows a schematic view of the setup for the G/T measurement, in which the noise power levels $P_2$ and $P_3$ of the receiving test equipment including satellite noise level measured in the far field and the carrier power measured in the far field, respectively, are determined.

Fig. 4    shows a diagram illustrating a group delay definition.

Fig. 5    shows a diagram illustrating a typical group delay vs. frequency.

Fig. 6    shows a schematic view of a principal setup for a GD measurement.

Fig. 7    shows a schematic view of a principal setup for a G/F measurement.

In the following description a measurement setup as well as the processing of different payload parameters of a satellite as device under test (DUT) in the near field and in the far field will be described. The following payload parameters will be addressed:

Gain over Noise Temperature (G/T)
Channel Group Delay (GD)
Gain over Frequency (G/F)

Gain over Temperature (G/T)

The Gain over Temperature (G/T) or Figure of Merit of a satellite receive antenna describes the ratio of the composite receiving antenna gain to the noise temperature (antenna noise temperature and effective input noise temperature of the satellite receiver) and is expressed in [1/K] or [dB/K]. The G/T parameter is determined by three separate power measurements. The relations for a measurement in the far field are given in equation (3). In the first measurement the noise power level $P_1$ of the receiving test equipment is determined. Therefore, the receive port of the measurement equipment (consisting of power meter PM, spectrum analyzer SA and receiver 230, cf. Fig. 2) has to be disconnected from the receive antenna 220 and has to be terminated by means of terminating element 260. In the second measurement the noise power level $P_2$ of the receiving test equipment (PM, SA, 230) including the satellite noise level is determined. Therefore, the receive antenna 220 of the measurement equipment (PM, SA, 230) is connected to the receiver 230 and pointed towards the satellite transmit antenna 210. Since only the noise power of the satellite (SRC, 210) is to be measured no carrier is to be transmitted to the satellite. In the third measurement the power level $P_3$ of the receiving test equipment (PM, SA, 230) noise including the satellite noise level as well as the carrier power is determined. Therefore, the measurement setup is the same as for the measurement of $P_2$ but now a carrier is supplied to the satellite transponder in order to operate it in linear mode. From these three measurements the far-field G/T parameter is calculated according to equation (3) considering the EIRP as transmitted from the measurement equipment, the considered noise and frequency bandwidth as well as the free-space loss of the downlink path.

For a measurement of the G/T parameter in the near field it has to be considered, as for the EIRP measurement, that up- and downlink antennas of the satellite have typically not developed their far-field gain for the given setup. The relations to determine the G/T parameter in the near-field are given in equation (4). Since $P_1$ does only contain the noise power of the measurement equipment, it is identical in near and far field. For the measurement of $P_2$ and $P_3$ the near-field correction factor for the downlink, respectively down- and uplink, would have to be considered in order to transfer the measurements from the near field to the far field. However, as can be seen from equation (4) the G/T parameter is computed as ratio of the signal to noise power. Therefore, the antenna and free-space loss relations for the downlink path cancel out each other. As a result the near-field correction factor has to be applied only for the uplink path of the measurement setup.

$$G/T_{FF} = \frac{kB}{EIRP_{T,M}} \frac{P_{3FF}-P_{2FF}}{P_{2FF}-P_1} \left(\frac{4\pi R_U}{\lambda_U}\right)^2 \tag{3}$$

$$G/T_{NF} = \frac{kB}{EIRP_{T,M}} \frac{P_{3NF}-P_{2NF}}{P_{2NF}-P_1} \left(\frac{4\pi v_U}{\lambda_U}\right)^2 \tag{4}$$

In equations (3) to (4) the following parameters are used:

$P_1$        Noise power level of receiving test equipment
$k$          Stefan Boltzmann Constant
$B$          Noise bandwidth corresponding to frequency bandwidth
$P_{2FF}$    Noise power level of receiving test equipment including satellite noise level measured in far field
$P_{3FF}$    Power level of receiving test equipment including satellite noise level and carrier power measured in far field
$EIRP_{T,M}$ EIRP at TX station measurement equipment

| $\lambda_U$ | Wavelength uplink |
| $R_U$ | Free space uplink distance |
| $G/T_{FF}$ | G/T measured in far field |
| $P_{2NF}$ | Noise power level of receiving test equipment including satellite noise level measured in near field |
| $P_{3NF}$ | Power level of receiving test equipment including satellite noise level and carrier power measured in near field |
| $v_U$ | Near-field correction factor for uplink |
| $G/T_{NF}$ | G/T measured in near field |

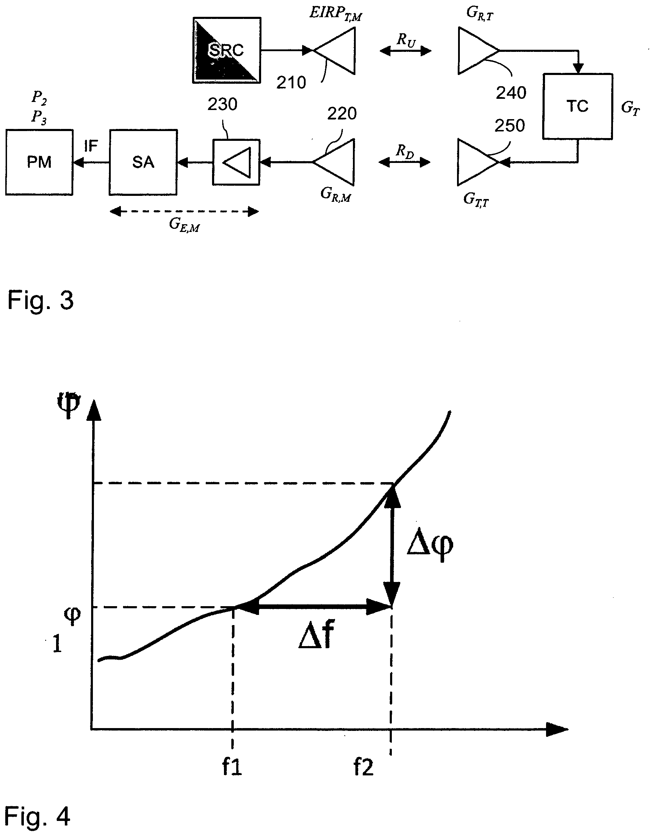

The principal setup for a G/T measurement is shown in Figure 2 for measurement of $P_1$ and in Figure 3 for measurement of $P_2$ and $P_3$. For measurement of $P_1$ the receiver 230 is terminated (by means of terminating element 260) and the noise power $P_1$ is measured. For measurement of $P_2$ the receive antenna 220 of the measurement equipment (PM, SA, 230) is connected and the noise power of measurement equipment (PM, SA, 230) and satellite transponder in idle mode is measured by the power meter PM. For measurement of $P_3$ an uplink signal is transmitted from the measurement equipment to the satellite (SRC, 210) in order to operate the satellite transponder in linear mode.

As alternative to the "fully" radiated case it is also possible to operate the satellite transponder in linear mode, i.e. semi-radiated, due to a test coupler signal instead of a radiated uplink. This allows a configuration with a single measurement antenna. Furthermore, the near-field correction factor for the uplink antenna is required. For this configuration equation (4) has to be adapted such that the transmitted EIRP of the measurement equipment together with the uplink loss are replaced by the input power fed through the test coupler connection.

Group Delay (GD)

The Group Delay (GD) versus Frequency (group delay response) is a measure of the slope of the phase response at any given frequency and it is a useful measure of time distortion. It is calculated by differentiating, with respect to frequency, the phase response versus frequency of the DUT. Variations in group delay cause signal distortion, just as deviations from linear phase cause distortion.

The group delay performance will be derived from phase measurement, taking the following relation into account

$$GD_{SAT} = -\frac{\Delta\varphi}{\Delta\omega} = -\frac{1}{2\pi} \cdot \frac{\Delta\varphi}{\Delta f} \tag{5}$$

$$\Delta\varphi = \angle S_{21}(f_1) - \angle S_{21}(f_2) \tag{6}$$

In equations (10) and (11) the following parameters are used:

| $\varphi$ | Phase angle |
| $\omega = 2\pi f$ | Frequency |

Figure 4 illustrates the mathematical definition by means of a simple sketch.

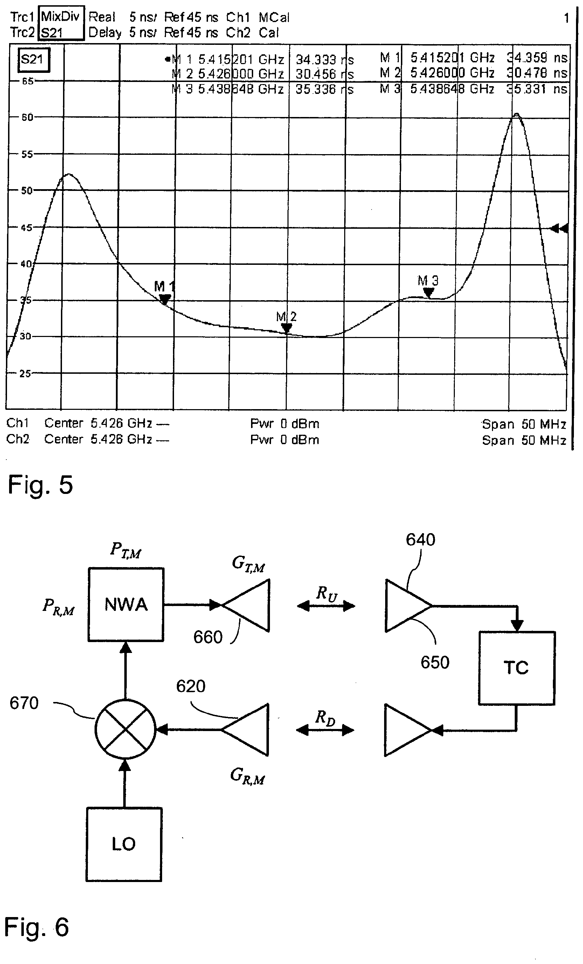

The goal of the Group Delay measurement is the determination of the phase or time flatness over the frequency band of the corresponding transponder channel as well as the variation with respect to a certain frequency sub-band. For most telecommunication transponders it is sufficient to measure the relative Group Delay instead of the absolute Group Delay. In some rare cases (e.g. navigation applications) where the absolute Group Delay is important it can be measured by applying a different calibration to the set-up equipment. Figure 5 shows a typical Group Delay plot versus the corresponding frequency band.

The measurement of the phase and therefore the Group Delay variation is performed by measuring the phase before the carrier signal is entering the DUT and directly after the DUT. By subtracting both phase measurements according to equation (5) the delta phase $\Delta\varphi$ can be determined. The final Group Delay result is then obtained by a simple mathematical operation according to equation (6).

Group Delay is measured typically in a conducted measurement set-up via test couplers by utilizing a vector network analyzer NWA (cf. Fig. 6) with either (a) build-in frequency offset capability in order to measure the phase between the different uplink and downlink frequencies or (b) utilizing an external up-converter in order to have the same frequencies at both, the up- and down-link path. This requires the knowledge of the test coupler impact to the group delay only.

The measurement approach utilizing test couplers TC does not take into account the possible influence of the receive (Rx) antenna 640 and the transmit (Tx) antenna 650. Due to the small channel bandwidth (36, 72 MHz) compared to the band width of both antennas (≥ 500 MHz) the impact of the antennas 640, 650 is negligible for typical telecommunication satellites. However, recent antenna and/or transponder developments for mobile communication utilize much larger bandwidth definitions (e.g. up to 500 MHz), which makes it important to take the antenna performance into account during the measurement by performing a radiated measurement set-up (see Figure 6). The depicted set-up shows the above mentioned approach (b) utilizing an external up-converter in front of the NWA input port in order to apply standard equipment to the set-up.

In order to apply this set-up which is a classical far-field set-up to near-field conditions no further adaption is required since the Group Delay measurement is carried out at one fixed location ($_{P0}$) in the near field. The transponder phase (including up- and downlink antennas) is therefore depending on the frequency, only. The near-field to far-field integral over the near-field grid does not affect the desired transponder phase. The following equations explain this in more detail for the planar near-field method due to the easier mathematics. For the cylindrical and/or spherical near-field method the same approach is valid for the Group Delay measurement.

The near-field response $b_0(x,y,z)$ of a generic antenna transmit spectrum $T(x,y,z=d)$ with a complex transponder signal $a_0(f)$ can be depicted according to equation (7). The variable f indicates the generic frequency dependency of the corresponding parameter.

$$b_0(\vec{P}, f) = a_0(f) \int_{-\infty}^{+\infty} \int_{-\infty}^{+\infty} \left[\vec{T}(\vec{K}, f) \cdot \vec{R}(\vec{K}, f)\right] \exp(j\gamma d) \exp(j\vec{K} \cdot \vec{P}) \, dkx \, dky \qquad (7)$$

$R(K)$ indicates the receiving spectrum of the utilized near-field probe antenna at the transversal wave number vector $K=k_x+k_y$. The vector $P$ denotes the spatial location at the near-field grid.

Equation (7) simplifies essentially under the assumption that the Group Delay measurement is carried out at a specific antenna beam location $(P_0=[x_0,y_0,z_0=d])$ in the near field and the assumption that the phase pattern variation of the antenna is relatively constant for usually small channel bandwidths under consideration. Equation (8) shows the remaining near-field transfer equation under those conditions.

$$b_0(P_0, f) = a_0(f) \left[\vec{T}(x_0, y_0, f) \cdot \vec{R}(x_0, y_0, f)\right] \exp(j\gamma d) \qquad (8)$$

Under the further condition of a relative Group Delay measurement the constant phase offset $\exp(j\gamma d)$ due to the near-field distance can be omitted, too.

$$b_0(P_0, f) = a_0(f) \left[\vec{T}(x_0, y_0, f) \cdot \vec{R}(x_0, y_0, f)\right] \qquad (9)$$

Taking further into account that the near-field probe owns a much wider bandwidth than the DUT antenna the frequency depending phase behavior of the probe can be neglected as well. Without the antenna coupling it is sufficient to consider the scalar transmit characteristic of the DUT antenna $T(x_0,y_0,f)$.

$$b_0(P_0, f) = a_0(f) \, T(x_0, y_0, f) \qquad (10)$$

Equation (10) shows the final situation related to the frequency depending parameters which are relevant for the Group Delay measurement under near-field conditions at one path, i.e. the uplink or the downlink path.

For measurements of an antenna with a significant phase pattern variation over the frequency range of interest equation (7) has to be evaluated in order to determine a correction factor from the difference of near-field to far-field phase information which is used to compute the group delay.

In case the measurement shall be carried out under fully radiated conditions, i.e. uplink and downlink path have to be combined into one transfer equation.

$$b_2(P_0, f_2) = T_{\text{Range}}(f_1) a_U(f_1) \underbrace{R_{DUT}(x_1, y_1, f_1) a_D(f_2) T_{DUT}(x_2, y_2, f_2)}_{Transponder} R_{\text{Range}}(f_2) \qquad (11)$$

Equation (11) shows the relevant transfer equation under fully radiated near-field condition which is compliant with a typical far-field measurement. According to Equation (10.) the Group Delay can be determined from the phase of

$b_2(P_0,f_2)$ after the phase response of the range antennas has been compensated.

In equations (7) to (11) the following parameters are used:

$b_2(P_0,f_2)$      Measured downlink signal in near field at location $P_0$ and at downlink frequency $f_2$

$a_U(f_1)$      Uplink signal at uplink frequency $f_1$

$R_{DUT}(x_1,y_1,f_1)$      Receive characteristic of the Transponder uplink (Rx) antenna at frequency $f_1$ at near-field location $x_1, y_1$

$a_D(f_2)$      Downlink signal at downlink frequency $f_2$

$T_{DUT}(x_2,y_2,f_2)$      Transmit characteristic of the Transponder downlink (Tx) antenna at frequency $f_2$ at near-field location $x_2, y_2$

Since the measurement set-up and even the relevant measurement equations are identical under near- and far-field conditions there is no special complexity given for the Group Delay measurement. The only items to be considered at the near-field are:

- Due to the small distance between probe and DUT it may be necessary for DUTs with separated uplink und downlink antennas to have two near-field probes at different locations. This could require a second near-field scanner for a probe on a tripod beside the default near-field scanner.

- The set-up in Figure 6 shows an additional up-converter (local oscillator LO together with mixer 670) in front of the network analyzer in order to overcome the issue with the different frequencies at up- and downlink path. The advantage is the possibility to use a standard network analyzer. However, the disadvantage is that this additional mixer 670 within the set-up has to be calibrated prior to the measurement and the final results corrected for. A different approach with easier measurements would be the usage of a state-of-the-art network analyzer NWA with integrated frequency offset mode in order to tune the 2nd port to a different frequency compared to the 1st port.

Gain over Frequency (G/F)

The Gain over Frequency (G/F) parameter describes the overall gain of the satellite including receive antenna gain, transponder gain, and transmit antenna gain for a closed up- and downlink loop. It is a dimensionless quantity and is expressed in [dB]. It is measured in a "fully" radiated configuration by transmitting an uplink signal with the test equipment and receiving the downlink signal. The ratio of the received and transmitted power is taken and the gain of the transmit and receive antennas of the measurement equipment together with the free space loss for up- and downlink have to be compensated. The relation for the G/F calculation in the far field is given in equation (12).

For a G/F measurement in the near field the same considerations have to be made as for EIRP and IPFD measurements. The up- and downlink distance for the computation of the free-space loss has to be replaced by the near-field correction factor. For the closed loop testing two different correction factors are required, one for the uplink and one for the downlink antenna of the satellite. The relation for the G/F calculation in the near field is given in equation (12).

$$G/F_{FF} = \frac{P_{R,M}}{P_{T,M}}\frac{1}{G_{T,M}G_{R,M}}\left(\frac{4\pi R_U}{\lambda_U}\frac{4\pi R_D}{\lambda_D}\right)^2 \qquad (12)$$

$$G/F_{NF} = \frac{P_{R,M}}{P_{T,M}}\frac{1}{G_{T,M}G_{R,M}}\left(\frac{4\pi \nu_U}{\lambda_U}\frac{4\pi \nu_D}{\lambda_D}\right)^2 \qquad (13)$$

In equations (12) and (13) the following parameters are used:

$G/F_{FF}$      G/F measured in far field

$G/F_{NF}$      G/F measured in near field

$P_{R,M}$      Receive power NWA

$P_{T,M}$      Transmit power NWA

$G_{T,M}$      Gain of transmit antenna measurement setup

$G_{R,M}$      Gain of receive antenna measurement setup

$R_U$      Free space uplink distance

$\lambda_U$      Wavelength uplink

| | |
|---|---|
| $R_D$ | Free space downlink distance |
| $\lambda_D$ | Wavelength downlink |
| $v_U$ | Near-field correction factor for uplink |
| $v_D$ | Near-field correction factor for downlink |

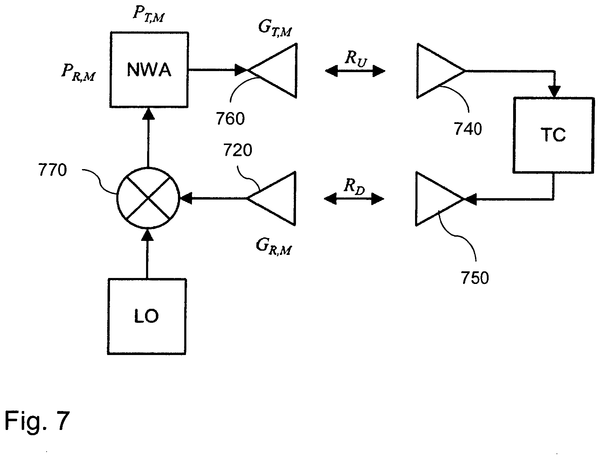

The principal setup for the G/F measurement is shown in Figure 7. The ratio of received and transmitted power is easily obtained using a network analyzer NWA and evaluating the $S_{21}$ parameter. It has to be considered for the setup that in the general case the satellite transponder will perform a frequency conversion. Up- and downlink signals will have different frequencies. Therefore, the signal received by the measurement equipment has to be converted to the transmit frequency for the evaluation of the G/F parameter. This is done using the mixer 770 and the local oscillator LO. The additional mixer 770 within the setup has to be calibrated prior to the measurement and the final results have to be corrected accordingly.

As for the other payload parameters considered so far it is also possible to measure G/F using test couplers TC. If up- and downlink signals are provided via test couplers TC the satellite transponder gain is characterized without the influence of the receiving and transmitting antennas. In order to measure the G/F parameter including the satellite antennas influence with just one radiated signal path, a two-step procedure has to be used. In one measurement the uplink is radiated and a test coupler is used to measure the downlink signal. In a second measurement the uplink is supplied by a test coupler and the downlink is radiated. Both measurements have to be joined and to be corrected for the test coupler influence.

The complexity of the implementation is mainly driven by the channel bandwidth and the required frequency resolution. In order to have an "exact" calculation of the G/F parameter the near-field correction factor is required for each frequency point. For a "fully" radiated configuration correction factors are required for up- and downlink antennas. Depending on the number of frequency samples a huge number of correction factors will be required. Each correction factor requires a near-field pattern measurement thus having potential to enlarge the time for the near-field data acquisition significantly.

**Reference list**

| | |
|---|---|
| CATR | Compact Antenna Test Range |
| CCR | Compensated Compact Range |
| dB | Decibel |
| DUT | Device Under Test |
| FF | Far Field |
| K | Kelvin |
| NF | Near Field |
| RF | Radio Frequency |
| Rx | Receive |
| Tx | Transmit |
| 110 | satellite transmit antenna |
| 120 | receive antenna |
| 130 | coupler |
| 140 | receive antenna |
| 150 | transmit antenna |
| SRC | source |
| PM | power meter |
| SA | spectrum analyzer |
| TC | test coupler |
| v | Near-field correction factor |
| 210 | satellite transmit antenna |
| 220 | receive antenna |
| 230 | receiver |
| 240 | receive antenna |
| 250 | transmit antenna |
| 260 | terminating element |
| 620 | receive antenna |
| 640 | receive antenna |

| 650 | transmit antenna |
|-----|------------------|
| 660 | transmit antenna |
| NWA | Network analyzer |
| LO | Local oscillator |
| 720 | receive antenna |
| 740 | receive antenna |
| 750 | transmit antenna |
| 760 | transmit antenna |
| 770 | mixer |

**References**

RD 1    A. C. Newell, R. D. Ward, E. J. McFarlane; Gain and Power Parameters Measurements Using Planar Near Field Techniques, IEEE Transactions on Antennas and Propagation, vol. 36, no. 6, June 1988

**Claims**

1. A method for determination of a payload parameter of a device under test (110), wherein the payload parameter to be determined is dependent from a frequency band or is dependent from a noise temperature, comprising the steps of:

   a) conducting a plurality of near field payload measurements of the device under test (110);
   b) determining a respective near-field correction factor (v) for each measurement of the payload parameter;
   c) determining the payload parameter for the frequency band or the noise temperature by calculating it from the measured plurality of payload parameters and the respective near-field correction factors (v).

2. The method according to claim 1 or 2, wherein the near field correction factor (v) is obtained by processing a near-field antenna pattern of the device under test (110).

3. The method according to one of the preceding claims, wherein the step of conducting a near-field measurement comprises receiving a measurement signal with a near-field probe.

4. The method according to one of the preceding claims 1 to 3, wherein a gain over noise temperature is measured as a payload parameter.

5. The method according to claim 4, wherein the gain over noise temperature is determined by three separate power measurements, wherein

   - in a first measurement a first noise power level ($P_1$) of the receiving measurement equipment is determined,
   - in a second measurement a second noise power level ($P_2$) of the receiving measurement equipment is determined; and
   - in a third measurement a third noise power level ($P_3$) of the receiving measurement equipment and the device under test including noise of the device under test (110) and a carrier signal is determined;
   - the near-field correction factor (v) is considered for the second and the third power levels ($P_2$, $P_3$).

6. The method according to claim 4 or 5, wherein the near-field correction factor (v) is applied for an uplink path of the measurement equipment only.

7. The method according to one of the preceding claims 4 to 6, wherein the device under test is operated in a fully radiated configuration or in a semi-radiated mode.

8. The method according to one of the preceding claims, wherein a channel group delay is measured as a payload parameter.

9. The method according to claim 8, wherein separated near-field probes at different locations are used for a respective measurement in the uplink and the downlink path in case the device under test (110) comprises separate uplink and downlink antennas.

10. The method according to claim 8 to 9, wherein the measurement equipment comprises means to convert between up-link and down-link frequencies.

11. The method according to one of the preceding claims 1 to 3, wherein a gain over frequency is measured as a payload parameter.

12. The method according to one of the preceding claims, wherein the gain over frequency is calculated from the ratio of a received power and a transmitted power and the gain of the transmit and receive antennas of a measurement equipment

13. The method according to one of the preceding claims 8 to 12, wherein the near field correction factor (v) is calculated from measured near-field pattern data which is obtained by a near-field scan of the device under test (110) for at least one frequency of the frequency band.

14. The method according to claim 13, wherein the near-field pattern data is used for a subsequent approximation or interpolation in a frequency band.

**Patentansprüche**

1. Verfahren zur Bestimmung eines Nutzlastparameters eines Prüflings (110), wobei der zu bestimmende Nutzlastparameter von einem Frequenzband oder von einer Rauschtemperatur abhängig ist, umfassend die Schritte:

   a) Durchführen mehrerer Nahfeld-Nutzlastmessungen des Prüflings (110);
   b) Bestimmen eines jeweiligen Nahfeld-Korrekturfaktors (v) für jede Messung des Nutzlastparameters;
   c) Bestimmen des Nutzlastparameters für das Frequenzband oder die Rauschtemperatur, indem es aus der gemessenen Vielzahl von Nutzlastparametern und den jeweiligen Nahfeld- Korrekturfaktoren (v) berechnet wird.

2. Verfahren nach Anspruch 1 oder 2, wobei der Nahfeld-Korrekturfaktor (v) durch Verarbeiten eines Nahfeldantennenmusters des Prüflings (110) erhalten wird.

3. Verfahren nach einem der vorhergehenden Ansprüche, wobei der Schritt des Durchführens einer Nahfeldmessung das Empfangen eines Messsignals mit einer Nahfeldsonde umfasst.

4. Verfahren nach einem der vorhergehenden Ansprüche 1 bis 3, wobei als Nutzlastparameter eine Verstärkung über der Rauschtemperatur gemessen wird.

5. Verfahren nach Anspruch 4, wobei die Verstärkung über der Rauschtemperatur durch drei getrennte Leistungsmessungen bestimmt wird, wobei

   - in einer ersten Messung ein erster Rauschleistungspegel ($P_1$) der Empfangsmesseinrichtung ermittelt wird,
   - in einer zweiten Messung ein zweiter Rauschleistungspegel ($P_2$) der Empfangsmesseinrichtung bestimmt wird ; und
   - in einer dritten Messung ein dritter Rauschleistungspegel ($P_3$) der Empfangsmesseinrichtung und des Prüflings einschließlich Rauschen des Prüflings (110) und eines Trägersignals bestimmt wird;
   - der Nahfeldkorrekturfaktor (v) für den zweiten und dritten Leistungspegel ($P_2$, $P_3$) berücksichtigt wird.

6. Verfahren nach Anspruch 4 oder 5, wobei die Nahfeld-Korrekturfaktor (v) nur für eine Aufwärtsstrecke des Messgeräts angewendet wird.

7. Verfahren nach einem der vorhergehenden Ansprüche 4 bis 6, wobei der Prüfling in einer vollständig ausgestrahlten Konfiguration oder in einem halb ausgestrahlten Modus betrieben wird.

8. Verfahren nach einem der vorhergehenden Ansprüche, wobei als Nutzlastparameter eine Kanalgruppenverzögerung gemessen wird.

9. Verfahren nach Anspruch 8, wobei getrennte Nahfeldsonden an verschiedenen Orten für eine jeweilige Messung in der Aufwärtsstrecke und der Abwärtsstrecke verwendet werden, falls der Prüfling (110) getrennte Aufwärtsstrecken- und Abwärtsstreckenantennen aufweist.

10. Verfahren nach Anspruch 8 bis 9, wobei die Messausrüstung Mittel zum Umwandeln zwischen Aufwärtsstrecken- und Abwärtsstreckenfrequenzen umfasst.

11. Verfahren nach einem der vorhergehenden Ansprüche 1 bis 3, wobei als Nutzlastparameter eine Verstärkung über der Frequenz gemessen wird.

12. Verfahren nach einem der vorhergehenden Ansprüche, wobei die Verstärkung über der Frequenz aus dem Verhältnis einer Empfangsleistung und einer Sendeleistung und der Verstärkung der Sende- und Empfangsantennen eines Messgeräts berechnet wird

13. Verfahren nach einem der vorhergehenden Ansprüche 8 bis 12, wobei der Nahfeldkorrekturfaktor (v) aus gemessenen Nahfeldmusterdaten berechnet wird, die durch eine Nahfeldabtastung des Prüflings (110) für mindestens eine Frequenz des Frequenzbandes erhalten werden.

14. Verfahren nach Anspruch 13, wobei die Nahfeldmusterdaten für eine nachfolgende Approximation oder Interpolation in einem Frequenzband verwendet werden.


**Revendications**

1. Procédé de détermination d'un paramètre de charge utile d'un dispositif en test (110), dans lequel le paramètre de charge utile devant être déterminé est dépendant d'une bande de fréquences ou est dépendant d'une température de bruit, comprenant les étapes de :

   a) conduite d'une pluralité de mesure de charge utile en champ proche du dispositif en test (110) ;
   b) détermination d'un facteur de correction en champ proche (v) respectif pour chaque mesure du paramètre de charge utile ;
   c) détermination du paramètre de charge utile pour la bande de fréquences ou la température de bruit en le calculant à partir de la pluralité mesurée de paramètres de charge utile et des facteurs de correction en champ proche (v) respectifs.

2. Procédé selon la revendication 1, dans lequel le facteur de correction en champ proche (v) est obtenu en traitant un diagramme d'antenne en champ proche du dispositif en test (110).

3. Procédé selon l'une des revendications précédentes, dans lequel l'étape de conduite d'une mesure en champ proche comprend la réception d'un signal de mesure avec une sonde en champ proche.

4. Procédé selon l'une des revendications précédentes 1 à 3, dans lequel un gain sur la température de bruit est mesuré comme un paramètre de charge utile.

5. Procédé selon la revendication 4, dans lequel le gain sur la température de bruit est déterminé par trois mesures de puissance séparées, dans lequel

   - dans une première mesure, un premier niveau de puissance de bruit ($P_1$) de l'équipement de mesure de réception est déterminé,
   - dans une deuxième mesure, un deuxième niveau de puissance de bruit ($P_2$) de l'équipement de mesure de réception est déterminé ; et
   - dans une troisième mesure, un troisième niveau de puissance de bruit ($P_3$) de l'équipement de mesure de réception et du dispositif en test incluant un bruit du dispositif en test (110) et d'un signal de porteuse est déterminé ;
   - le facteur de correction en champ proche (v) est pris en considération pour les deuxième et troisième niveaux de puissance ($P_2$, $P_3$).

6. Procédé selon la revendication 4 ou 5, dans lequel le facteur de correction en champ proche (v) est appliqué pour une voie montante de l'équipement de mesure uniquement.

7. Procédé selon l'une des revendications précédentes 4 à 6, dans lequel le dispositif en test est opéré dans une configuration totalement rayonnée ou dans un mode semi-rayonné.

8. Procédé selon l'une des revendications précédentes, dans lequel un retard de groupe de canaux est mesuré comme un paramètre de charge utile.

9. Procédé selon la revendication 8, dans lequel des sondes en champ proche séparées en différents emplacements sont utilisées pour une mesure respective dans la voie montante et la voie descendante dans le cas où le dispositif en test (110) comprend des antennes de voie montante et de voie descendante séparées.

10. Procédé selon la revendication 8 ou 9, dans lequel l'équipement de mesure comprend un moyen pour convertir entre des fréquences en voie montante et en voie descendante.

11. Procédé selon l'une des revendications précédentes 1 à 3, dans lequel un gain sur la fréquence est mesuré comme un paramètre de charge utile.

12. Procédé selon l'une des revendications précédentes, dans lequel le gain sur la fréquence est calculé à partir du rapport d'une puissance reçue et d'une puissance transmise et du gain des antennes de transmission et de réception d'un équipement de mesure.

13. Procédé selon l'une des revendications précédentes 8 à 12, dans lequel le facteur de correction en champ proche (v) est calculé à partir de données de diagramme en champ proche mesurées qui sont obtenues par un balayage en champ proche du dispositif en test (110) pour au moins une fréquence de la bande de fréquences.

14. Procédé selon la revendication 13, dans lequel les données de diagramme en champ proche sont utilisées pour une approximation ou une interpolation subséquente dans une bande de fréquences.

## Fig. 1

## Fig. 2

Fig. 3

Fig. 4

Trc1 | MixDiv | Real  5 ns/  Ref 45 ns  Ch1  MCal                                                    1
Trc2 | S21 | Delay  5 ns/  Ref 45 ns  Ch2  Cal

| S21 | | | ● M 1 5.415201 GHz | 34.333 ns | M 1 | 5.415201 GHz | 34.359 ns |
| | | | M 2 5.426000 GHz | 30.456 ns | M 2 | 5.426000 GHz | 30.478 ns |
| | | | M 3 5.438648 GHz | 35.336 ns | M 3 | 5.438648 GHz | 35.331 ns |

Ch1  Center 5.426 GHz —          Pwr 0 dBm              Span 50 MHz
Ch2  Center 5.426 GHz —          Pwr 0 dBm              Span 50 MHz

## Fig. 5

## Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102624467 A

**Non-patent literature cited in the description**

- **A. C. NEWELL ; R. D. WARD ; E. J. MCFARLANE.** Gain and Power Parameters Measurements Using Planar Near Field Techniques. *IEEE Transactions on Antennas and Propagation,* June 1988, vol. 36 (6